# EUROPÄISCHE PATENTSCHRIFT

(11) **EP 1 607 309 B1**
(45) Veröffentlichungstag und Bekanntmachung des Hinweises auf die Patenterteilung: **19.03.2008**
(21) Anmeldenummer: 05103865.1
(22) Anmeldetag: 10.05.2005
(51) Int. Cl.: B62D 6/00, B62D 113/00, B62D 137/00

(54) **Verfahren zum Betrieb eines Lenksystems eines Kraftfahrzeugs**
Method of operating the steering system of a motor vehicle
Procédé de fonctionnement d'un système de direction d'un véhicule automobile

(30) Priorität: 15.06.2004 DE 102004028828
(43) Veröffentlichungstag der Anmeldung: 21.12.2005
(73) Patentinhaber: ZF Lenksysteme GmbH, 73527 Schwäbisch Gmünd (DE)
(72) Erfinder: Klier, Willy, 71404 Korb (DE)

(56) Entgegenhaltungen:
- EP-A- 1 354 788
- DE-A1- 10 012 133
- DE-A1- 10 032 340
- DE-A1- 10 325 484
- DE-A1- 19 749 005
- DE-A1- 19 751 125
- DE-A1- 19 905 433
- US-A1- 2002 036 477

## Beschreibung

Die Erfindung betrifft ein Verfahren zum Betrieb eines Lenksystems eines Kraftfahrzeugs.

Die Erfindung betrifft ebenso ein Computerprogramm und ein Computerprogrammprodukt mit Programmcodemitteln, um ein derartiges Verfahren zum Betrieb eines Lenksystems auf einem Rechner, insbesondere auf einem Mikroprozessor, eines Steuergeräts des Lenksystems durchzuführen und ein derartiges Steuergerät.

Aus der DE 197 51 125 A1 ist ein derartiges Verfahren zum Betrieb eines Lenksystems bekannt, welches Überlagerungsmittel aufweist, die einen Zusatzwinkel erzeugen und den von der Lenkhandhabe vorgegebenen Lenkradwinkel mit diesem Zusatzwinkel überlagern. Dabei wird die Bewegung (Zusatzwinkel bzw. Motorwinkel) eines Stellantriebs, d. h. eines Elektromotors mittels eines Überlagerungsgetriebes (beispielsweise ein Planetengetriebe) mit dem Lenkradwinkel überlagert. Mit Hilfe der Überlagerungsmittel ist es möglich, einen von der Lenkhandhabe vorgegebenen Lenkradwinkel zur Erhöhung der Fahrstabilität bzw. des Komforts mit einem Zusatzwinkel zu überlagern, so dass sich fahrdynamikabhängig bzw. komfortabhängig ein variables Übersetzungsverhältnis zwischen Lenkradwinkel und mittlerem Lenkwinkel der lenkbaren Räder des Kraftfahrzeugs einstellt. Dadurch ist es sicherheitstechnisch z.B. möglich, ein Kraftfahrzeug, welches auszubrechen droht, durch eine entsprechende Korrektur des Lenkwinkels wieder in eine stabile Fahrsituation zurückzuführen. Die Überlagerungsmittel können andere Fahrdynamiksysteme (z.B. ein elektronisches Stabilitätsprogramm (ESP) oder ein Antiblockiersystem (ABS)) unterstützen. Komforttechnisch ist es möglich, einem Lenkradwinkel beispielsweise einen geschwindigkeitsabhängigen Zusatzwinkel zu überlagern. Dadurch kann bei niedrigen Fahrzeuggeschwindigkeiten ein relativ kleines Übersetzungsverhältnis eingestellt werden, d.h. eine relativ kleine Drehung der Lenkhandhabe führt zu einem relativ großen Lenkwinkel der Räder, während bei hohen Fahrzeuggeschwindigkeiten ein relativ großes Übersetzungsverhältnis eingestellt werden kann, damit sich die Fahrstabilität des Kraftfahrzeugs erhöht. Ein ähnliches System wird in der DE 103 25 484 und der DE 100 12 133 gezeigt.

Nachteilig ist, wenn das Lenksystem selbst oder die zu unterstützenden weiteren Fahrdynamiksysteme nicht über die tatsächlich verfügbare Dynamik oder die Funktionalität der Überlagerungsmittel bzw. des Stellantriebs informiert sind. Auf das Lenksystem bzw. den Stellantrieb wirken noch weitere Einflüsse, wie z.B. Temperatur oder Reaktionsmomente und -kräfte. Dadurch könnten Sollwerte für zu überlagernde Zusatzwinkel und Zusatzwinkelgeschwindigkeiten, welche vom Stellantrieb nicht realisierbar wären - sei es nun wegen einer Funktionsstörung oder einfach durch die aktuelle Fahrsituation (z. B. durch den Zustand des Verbrennungsmotors des Kraftfahrzeugs) bedingt - sowohl von den Nutzfunktionen des Lenksystems selbst (z. B. variable Lenkübersetzung) als auch von den weiteren Fahrdynamiksystemen vermieden werden.

Der vorliegenden Erfindung liegt die Aufgabe zugrunde, ein Verfahren zum Betrieb eines Lenksystems, ein Computerprogramm, ein Computerprogrammprodukt und ein Steuergerät der eingangs erwähnten Art zu schaffen, welche die Zuverlässigkeit, Verfügbarkeit und Funktionssicherheit des Lenksystems verbessern.

Diese Aufgabe wird erfindungsgemäß durch ein Verfahren mit den kennzeichnenden Merkmalen des Anspruchs 1 gelöst. Die Aufgabe wird hinsichtlich des Computerprogramms, des Computerprogrammprodukts und des Steuergeräts durch die Ansprüche 8, 9 und 10 gelöst.

Durch das erfindungsgemäße Verfahren zum Betrieb eines Lenksystems werden vorteilhafterweise die Dynamik bzw. die Funktionalität des Stellantriebs zur Erzeugung des Zusatzwinkels überwacht. Diese verfügbaren Informationen können vom Lenksystem und von anderen Fahrdynamiksystemen (ESP, ASR, ABS, etc.) verwendet werden, was insgesamt zu einer erhöhten Zuverlässigkeit und Funktionssicherheit des Lenksystems führt.

In der Erfindung ist ferner vorgesehen, dass eine erste Funktion den Status der Dynamik des Stellantriebs anhand einer Differenz eines Zeitverlaufs eines gemessenen Zusatzwinkels von einem nominalen modellbasierten Zeitverlauf eines Zusatzwinkels des Stellantriebs ermittelt, wobei die Differenz jeweils von Winkel, Winkelgeschwindigkeit und Winkelbeschleunigung berechnet wird. Dabei gibt in einer weiteren Ausbildung die erste Funktion den Status der Dynamik des Stellantriebs mit "0" bzw. "in Ordnung", wenn die Absolutbeträge aller Differenzwerte von Winkel, Winkelgeschwindigkeit und Winkelbeschleunigung kleiner oder gleich deren entsprechend vorgegebene Schwellwerte sind und andernfalls mit "1" bzw. "nicht in Ordnung" an.

Durch diese Maßnahmen wird anhand eines Modells des Stellantriebs eine tatsächliche, gemessene mit einer erwarteten, modellbasierten Dynamik des Stellantriebs verglichen. Dadurch kann ein Status des Stellantriebs hinreichend genau bestimmt werden. Es ist von Bedeutung, jedes dynamische Fehlverhalten des Stellantriebs mit einer möglichst kleinen Fehlerlatenzzeit zu erkennen, also einen Status "nicht in Ordnung" auszugeben, ohne dabei aber unnötige Fehlalarme auszulösen. Aus diesem Grund sollten die jeweiligen Schwellwerte so ausgelegt sein, dass der gültige Arbeitsbereich des Stellantriebs möglichst vollständig abgedeckt ist.

Gemäß einer bevorzugten Ausführungsform der Erfindung kann ein echtzeitfähiges Modell 2. Ordnung als Dynamikmodell für den Stellantrieb zum Einsatz kommen, welches einen Sollwert des Zusatzwinkels als Eingangsgröße erhält und in Echtzeit modellbasierte Istwerte für Zusatzwinkel, Zusatzwinkelgeschwindigkeit und Zusatzwinkelbeschleunigung berechnet.

Vorteilhaft ist außerdem, wenn eine zweite Funktion eine maximal positive und/oder negative verfügbare zusätzliche Zusatzwinkelgeschwindigkeit des Stellantriebs modellbasiert schätzt.

Dadurch kann weiteren Fahrdynamiksystemen eine maximal verfügbare Dynamikreserve des Stellantriebs, d.h. zusätzliche Überlagerungsgeschwindigkeit, mitgeteilt werden. Die Fahrdynamiksysteme können sich dann ihrerseits bei Steuerungen bzw. Regelungen auf diese Bedingung einstellen und Sollwertvorgaben für die Überlagerungsmittel, deren Durchführung aufgrund der maximal verfügbaren Dynamik des Stellantriebs (positiv/negativ - je nach aktueller und entgegengesetzter Drehrichtung) nicht möglich ist, beispielsweise von vornherein vermeiden.

Wie vorstehend bereits ausgeführt, ist es vorteilhaft, wenn die Ausgaben der ersten und/oder der zweiten Funktion bzw. der Status der Dynamik des Stellantriebs und/oder die geschätzte maximal verfügbare zusätzliche positive und/oder negative Zusatzwinkelgeschwindigkeit des Stellantriebs, z.B. über eine entsprechende Schnittstelle (über einen CAN-Bus des Kraftfahrzeugs) anderen Fahrdynamiksystemen, insbesondere ESP, ASR und ABS zur Verfügung gestellt werden.

Erfindungsgemäß kann vorgesehen sein, dass das Steuergerät unter anderem den Sollwert des Zusatzwinkels, der Zusatzwinkel, den Ritzelwinkel, den Lenkradwinkel und die Fahrzeuggeschwindigkeit als Eingangsgrößen, insbesondere von Sensoren oder weiteren Fahrzeugsystemen erhält oder anhand anderer Eingangsgrößen, insbesondere Raddrehzahlen mittels eines geeigneten Modells, insbesondere des Lenksystems berechnet.

Das Lenksystem weist, insbesondere zur Ansteuerung der Überlagerungsmittel, ein elektronisches Steuergerät auf, auf welchem das erfindungsgemäße Verfahren zum Betrieb des Lenksystems abläuft. Das Steuergerät erhält dabei als Eingangsgrößen unter anderem den Zusatzwinkel, den Lenkradwinkel, den Ritzelwinkel, die Fahrzeuggeschwindigkeit oder dergleichen von Sensoren und/oder anderen Fahrzeugsystemen oder berechnet diese Größen aufgrund anderer Größen des Lenksystems bzw. des Kraftfahrzeugs. Aufgrund dieser Eingangsgrößen werden dann entsprechende elektrische Ansteuersignale zur Ansteuerung der Überlagerungsmittel ermittelt.

Das Verfahren zum Betrieb eines erfindungsgemäßen Lenksystems ist vorteilhafterweise als Computerprogramm auf dem Steuergerät des Lenksystem realisiert. Dazu ist das Computerprogramm in einem Speicherelement des Steuergeräts gespeichert. Durch die Abarbeitung auf einem Mikroprozessor des Steuergeräts wird das Verfahren ausgeführt. Das Computerprogramm kann auf einem computerlesbaren Datenträger (Diskette, CD, DVD, Festplatte, USB-Memorystick, oder dergleichen) oder einem Internet-Server als Computerprogrammprodukt gespeichert sein und von dort aus in das Speicherelement des Steuergeräts übertragen werden.

Nachfolgend ist anhand der Zeichnung ein Ausführungsbeispiel der Erfindung prinzipmäßig dargestellt.

Es zeigen:
- Fig. 1: ein Schema eines Überlagerungslenksystems, welches durch ein erfindungsgemäßes Verfahren betrieben wird;
- Fig. 2: ein Schema einer ersten Funktion des erfindungsgemäßen Verfahrens zur Überwachung der Dynamik des Stellers; und
- Fig. 3: ein Schema einer zweiten Funktion des erfindungsgemäßen Verfahrens zur Schätzung der Dynamikreserve des Stellantriebs.

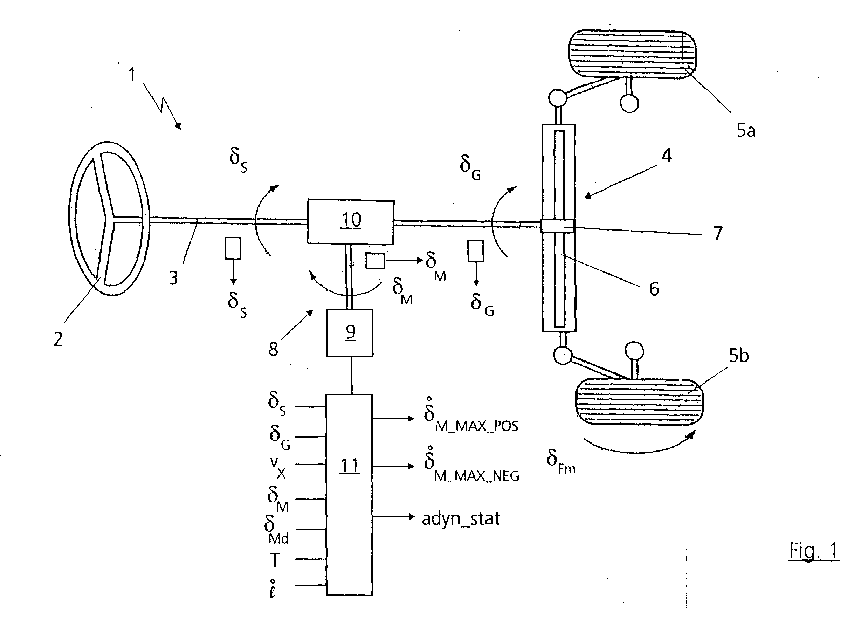

In Fig. 1 ist ein Lenksystem 1 eines Kraftfahrzeugs dargestellt. Das Lenksystem 1 weist eine als Lenkrad ausgebildete Lenkhandhabe 2 auf. Das Lenkrad 2 ist über eine Gelenkwelle 3 mit einem Lenkgetriebe 4 verbunden. Das Lenkgetriebe 4 dient dazu, einen Drehwinkel der Gelenkwelle 3 in einen Lenkwinkel δ_{Fm} von lenkbaren Rädern 5a, 5b des Kraftfahrzeugs umzusetzen. Das Lenkgetriebe 4 weist eine Zahnstange 6 und ein Ritzel 7 auf, an welches die Gelenkwelle 3 angreift. Das Lenksystem 1 umfasst darüber hinaus Überlagerungsmittel 8, die einen als Elektromotor ausgebildeten Stellantrieb 9 und ein von diesem angetriebenes Überlagerungsgetriebe 10 aufweisen. Das Überlagerungsgetriebe ist als Planetengetriebe 10 ausgebildet. Durch das Lenkrad 2 wird ein Lenkradwinkel δ_{S} als Maß für einen gewünschten Lenkwinkel δ_{Fm} der lenkbaren Räder 5a, 5b des Kraftfahrzeugs vorgegeben. Mit Hilfe des Elektromotors 9 wird dann ein Zusatzwinkel δ_{M} generiert und durch das Überlagerungsgetriebe 10 mit dem Lenkradwinkel δ_{S} überlagert. Der Zusatzwinkel bzw. Motorwinkel δ_{M} wird zur Verbesserung der Fahrdynamik des Kraftfahrzeugs bzw. des Komforts erzeugt. Die Summe aus Lenkradwinkel δ_{S} und Zusatzwinkel δ_{M} ergibt den Ritzelwinkel δ_{G}.

Den Überlagerungsmitteln 8 nachgeordnet könnte das Lenksystem 1 in einem anderen Ausführungsbeispiel zusätzlich einen Servoantrieb aufweisen (nicht dargestellt), welcher insbesondere der variablen Momentenunterstützung dient und auch als elektrohydraulischer Wandler bezeichnet wird. Der Servoantrieb umfasst eine Hydraulikpumpe, welche eine Hydraulikflüssigkeit über ein Hydraulikventil in das Lenkgetriebe 4 transportiert. Über das Hydraulikventil wird der Fluss der Hydraulikflüssigkeit an das eine oder das andere Ende der Zahnstange 6 gelenkt, um so eine entsprechende Momentenunterstützung in die gewünschte Richtung zu bewirken. Dies ist jedoch für die vorliegende Erfindung nicht zwingend notwendig.

Das Lenksystem 1 weist ein elektronisches Steuergerät 11 auf, welches unter anderem der Ansteuerung des Elektromotors 9 dient. Auf dem elektronischen Steuergerät 11 läuft ein erfindungsgemäßes Verfahren zum Betrieb des Lenksystems 1 ab. Dadurch wird unter anderem der Elektromotor 9 mit einem elektrischen Ansteuersignal δ_{Md}, welches dem Sollwert des vom Stellantrieb 9 zu überlagernden Zusatzwinkels δ_{M} entspricht, angesteuert. Die Ansteuerung des Elektromotors 9 erfolgt vorliegend in Abhängigkeit von der Fahrzeuggeschwindigkeit v_{X} des Kraftfahrzeugs, d. h. das Übersetzungsverhältnis zwischen dem Lenkradwinkel δ_{S} und dem Ritzelwinkel δ_{G} bzw. dem Lenkwinkel δ_{Fm} der Räder 5a, 5b wird durch die Überlagerung des Lenkwinkels δ_{S} mit verschiedenen, geschwindigkeitsabhängigen Zusatzwinkeln δ_{M} in Abhängigkeit von der Fahrzeuggeschwindigkeit v_{X} eingestellt. Dadurch ist es möglich, bei niedrigen Fahrzeuggeschwindigkeiten v_{X} ein relativ kleines Übersetzungsverhältnis vorzugeben, bei welchen eine relativ geringe Drehung des Lenkrads 2 zu einem relativ großen Lenkwinkel δ_{Fm} der Räder 5a, 5b führt. Ebenso ist es bei einer hohen Fahrzeuggeschwindigkeit v_{X} aus Stabilitätsgründen denkbar, ein relativ großes Übersetzungsverhältnis vorzugeben. Diese Abhängigkeit von der Fahrzeuggeschwindigkeit v_{X} ist jedoch ebenfalls für die Erfindung nicht zwingend erforderlich.

Damit die vorstehend angeführte Steuerungsfunktion ausgeführt werden kann, erhält das Steuergerät 11 als Eingangssignal die aktuelle Fahrzeuggeschwindigkeit v_{X} (z. B. über den CAN-Bus des Kraftfahrzeugs). Außerdem weist das Lenksystem 1 Sensoren 12a, 12b, 12c auf, welche den Lenkradwinkel δ_{S}, den Zusatzwinkel δ_{M} und den Ritzelwinkel δ_{G} messen. Wie aus Fig. 1 ersichtlich, wird das Steuergerät 11 über die Sensoren 12a, 12b, 12c und weitere Fahrzeugsysteme mit den Eingangssignalen Lenkradwinkel δ_{S}, Ritzelwinkel δ_{G}, aktuelle Fahrzeuggeschwindigkeit v_{X}, Zusatzwinkel δ_{M}, Sollwert des Zusatzwinkels δ_{Md} (z. B. von anderen Fahrdynamiksystemen), aktuelle Temperatur T (durch einen nicht dargestellten Temperatursensor) und Zahnstangenhubverlauf ℓ̇ versorgt. Alternativ oder zusätzlich (z.B. zur Plausiblitätsüberwachung) könnten mehrere dieser Größen auch anhand der anderen oder weiterer Eingangsgrößen (z.B. Raddrehzahlen, etc.) insbesondere mit Hilfe geeigneter Modelle berechnet werden.

Das Steuergerät 11 weist als Ausgangssignale einen Statuswert adyn stat für die Dynamik des Stellantriebs 9 und die geschätzte maximal verfügbare zusätzliche positive δ̇*_{M_MAX_POS}* und negative δ̇*_{M_MAX_NEG}* Zusatzwinkelgeschwindigkeit des Stellantriebs 9 auf. Diese Ausgaben werden über eine entsprechende Schnittstelle (über den CAN-Bus des Kraftfahrzeugs) anderen Fahrdynamiksystemen, insbesondere ESP, ASR und ABS zur Verfügung gestellt (nicht näher dargestellt). Dadurch werden den weiteren Fahrdynamiksystemen die maximal verfügbare Dynamikreserve, d. h. die zusätzliche Überlagerungsgeschwindigkeit δ̇*_{M_MAX_POS},* δ̇*_{M_MAX_NEG}* des Stellantriebs 9 und der Statuswert adyn stat der Dynamik des Stellantriebs 9 mitgeteilt. Die Fahrdynamiksysteme können sich dann ihrerseits bei ihren Steuerungen bzw. Regelungen auf diese Bedingungen einstellen und Sollwertvorgaben δ_{Md} für die Überlagerungsmittel 8, deren Durchführung aufgrund der maximal verfügbaren Dynamik des Stellantriebs 9 nicht möglich ist, beispielsweise von vornherein unterlassen.

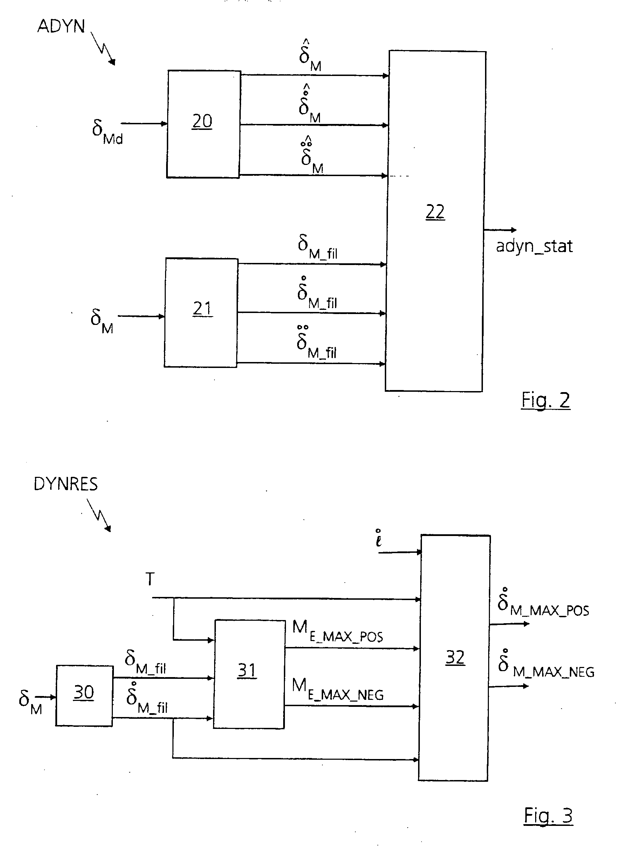

Die Ausgangssignale adyn_stat, δ̇*_{M_MAX_POS}* und δ̇*_{M_MAX_NEG}* werden von dem erfindungsgemäßen Verfahren zum Betrieb eines Lenksystems generiert. Dazu ermittelt eine erste Sicherheitsfunktion ADYN (siehe Fig. 2) den Statuswert adyn_stat für die Dynamik des Stellantriebs 9 und eine zweite Funktion DYNRES (siehe Fig. 3) die geschätzte maximal verfügbare zusätzliche positive δ̇*_{M_MAX_POS}* und negative δ̇*_{M_AMY_NEG}* Zusatzwinkelgeschwindigkeit des Stellantriebs 9.

In Fig. 2 ist schematisch die Sicherheitsfunktion ADYN dargestellt. Ein Funktionsblock 20 stellt ein nichtlineares, echtzeitfähiges Modell zweiter Ordnung des Stellantriebs 9 dar und erhält als Eingangssignal den am Stellantrieb 9 einzustellenden Sollwert des Zusatzwinkels δ_{Md}. Aus dem Zeitverlauf des Sollwerts des Zusatzwinkels δ_{Md} wird modellbasiert die erwartete Dynamik des Stellantriebs 9 berechnet. Dazu werden die erwarteten Istwerte für Zusatzwinkel (δ̂*_{M}*), Zusatzwinkelgeschwindigkeit ( 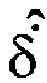 *_{M}*) und Zusatzwinkelbeschleunigung ( 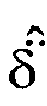 *_{M}*) berechnet und einem weiteren Funktionsblock 22 übergeben. Ein Funktionsblock 21 erhält als Eingangssignal den aktuell eingestellten, von dem Sensor 12b gemessenen Zusatzwinkel δ_{M}. Dieser wird gefiltert und nach der Zeit abgeleitet. Die ebenfalls an den Funktionsblock 22 gehenden Ausgänge des Funktionsblocks 21 bilden der gefilterte Zusatzwinkel *δ_{M_fil}*, die Geschwindigkeit des gefilterten Zusatzwinkels δ̇*_{M_fil}* und die Beschleunigung des gefilterten Zusatzwinkels 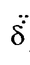 *_{M_fil}*. Der Funktionsblock 22 vergleicht die Modellistwerte δ̂*_{M}*, 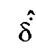 und 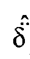 *_{M}* mit den entsprechenden gemessenen Istwerten *δ_{M_fil},* δ̇*_{M_fil}* und 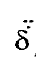 *_{M_fil}*. Die so entstandenen Differenzwerte werden betragsmäßig mit vorgegebenen Schwellwerten verglichen. Wenn die Beträge aller Differenzwerte kleiner oder gleich dem entsprechenden Schwellwert sind, wird von dem Funktionsblock 22 als Ausgangssignal adyn stat (elektrisches Signal) "0" bzw. "in Ordnung", andernfalls "1" bzw. "nicht in Ordnung" ausgegeben. Dabei ist es von Bedeutung, jedes dynamische Fehlverhalten des Stellantriebs 9 mit einer möglichst kleinen Fehlerlatenzzeit zu erkennen, also einen Status adyn stat mit "nicht in Ordnung" auszugeben, ohne dabei aber unnötige Fehlalarme auszulösen. Aus diesem Grund müssen die jeweiligen Schwellwerte für das jeweilige Lenksystem 1 eines Kraftfahrzeugs so gewählt werden, dass der gültige Arbeitsbereich des Stellantriebs inklusive notwendiger Toleranzbereiche möglichst vollständig abgedeckt ist. Des weiteren könnten in einem anderen Ausführungsbeispiel auch noch Statusvorgaben wie "OFF", "RESET" oder "NORMAL" von einer übergeordneten Funktion oder Fehlerstrategie verarbeitet werden.

In Fig. 3 ist schematisch die Funktion DYNRES dargestellt. Ein Funktionsblock 30 erhält als Eingangssignal den aktuell von dem Sensor 12b gemessenen Zusatzwinkel δ_{M}. Dieser wird dort gefiltert und nach der Zeit abgeleitet, so dass als Ausgangssignale der aktuelle, gefilterte Zusatzwinkel *δ_{M_fil}* und die aktuelle Geschwindigkeit des gefilterten Zusatzwinkels δ̇*_{M_fil}* an einen Funktionsblock 31 ausgegeben wird. Der Funktionsblock 31 erhält zusätzlich die aktuelle Außentemperatur T von einem Temperatursensor (nicht dargestellt), da die Außentemperatur T ebenfalls das Lenksystem 1 beeinflusst. Der Funktionsblock 31 stellt ein lineares Modell für das elektrische Moment dar und ermittelt aus den Eingangswerten *δ_{M_fil},* δ̇*_{M_fil}* und T als Ausgangssignale das maximale positive und negative elektrische Moment M_{E_MAX_POS}, M_{E_MAX_NEG} des Stellantriebs 9. Die Ausgangssignale M_{E_MAX_POS}, M_{E_MAX_NEG} werden an einen als nichtlineares Modell der Mechanik des Lenksystems 1 ausgebildeten weiteren Funktionsblock 32 zusammen mit der Außentemperatur T, der aktuellen Geschwindigkeit des gefilterten Zusatzwinkels δ̇*_{M_fil}* und dem Zahnstangenhubverlauf *ℓ̇* als Eingangssignale übergeben. In dem Modell 32 werden nun Schätzwerte für die maximal zusätzlich verfügbare Zusatzwinkelgeschwindigkeit des Stellantriebs 9 erzeugt und diese mit der aktuellen Geschwindigkeit des Zusatzwinkels δ̇*_{M_fil}* verglichen, wonach die Schätzwerte für die maximal verfügbare zusätzliche positive δ̇*_{M_MAX_POS}* und negative δ̇*_{M_MAX_NEG}* Zusatzwinkelgeschwindigkeit (Überlagerungsgeschwindigkeit) des Stellantriebs 9 als Ausgangssignale ermittelt werden. Unter Berücksichtigung der Tatsache, dass das Vorzeichen der zusätzlichen Soll-Überlagerungsgeschwindigkeit unabhängig vom Vorzeichen der aktuellen absoluten Überlagerungsgeschwindigkeit ist, müssen zwei unterschiedliche Überlagerungsgeschwindigkeiten (positiv/negativ - je nach aktueller Drehrichtung) geschätzt werden.

In einem weiteren Ausführungsbeispiel könnten die Ausgangssignale δ̇*_{M_MAX_POS},* δ̇*_{M_MAX_NEG}* auch in mittlere zusätzliche Vorderradwinkelgeschwindigkeiten transformiert und zur Verfügung gestellt werden.

Zusammenfassend kann gesagt werden, dass durch das erfindungsgemäße Verfahren zum Betrieb des Lenksystems 1 die Dynamik bzw. die Funktionalität des Stellantriebs 9 zur Erzeugung des Zusatzwinkels δ_{M} durch die Funktionen ADYN und DYNRES wirksam überwacht werden. Die bereitgestellten Informationen können von einer Fehlerstrategie des Lenksystems 1 und von anderen Fahrdynamiksystemen (ESP, ASR, ABS, etc.) sowie zur Diagnose und langfristigen Beobachtung verwendet werden, was insgesamt zu einer erhöhten Zuverlässigkeit, Verfügbarkeit und Funktionssicherheit des Lenksystems 1 führt.

Das erfindungsgemäße Verfahren zum Betrieb des Lenksystems 1 mit den Funktionen ADYN und DYNRES ist in vorteilhafter Weise als Computerprogramm auf dem Steuergerät 11 realisiert. Dazu ist das Computerprogramm in einem Speicherelement des Steuergeräts 11 gespeichert (nicht dargestellt). Durch die Abarbeitung auf einem Mikroprozessor des Steuergeräts 11 wird das Verfahren laufend zu jedem Abtastschritt ausgeführt. Das Computerprogramm kann auf einem computerlesbaren Datenträger (Diskette, CD, DVD, Festplatte, USB-Memorystick, oder dergleichen) oder einem Internet-Server als Computerprogrammprodukt gespeichert sein und von dort aus in das Speicherelement des Steuergeräts 11 übertragen werden.

## Patentansprüche

1. Verfahren zum Betrieb eines Lenksystems (1) eines Kraftfahrzeugs, wobei
1.1. eine Lenkhandhabe (2) einen Lenkradwinkel (δ_{S}) als Maß für einen gewünschten Lenkwinkel (δ_{Fm}) für wenigstens ein lenkbares Rad (5a,5b) des Kraftfahrzeugs vorgibt, wobei
1.2. ein Lenkgetriebe (4) mit einem Ritzel (7) einen von dem Lenkradwinkel (δ_{S}) abhängigen Ritzelwinkel (δ_{G}) in den Lenkwinkel (δ_{Fm}) des wenigstens einen lenkbare Rades (5a,5b) des Kraftfahrzeugs umsetzt, wobei
1.3. Überlagerungsmittel (8) einen Zusatzwinkel (δ*_{M}*) durch einen Stellantrieb (9) und den Ritzelwinkel (δ_{G}) aus einer Überlagerung des Lenkradwinkels (δ_{S}) mit dem Zusatzwinkel (δ*_{M}*) durch ein Überlagerungsgetriebe (10) erzeugen und wobei
1.4. das Verfahren zum Betrieb des Lenksystems (1) und die Ansteuerung des Stellantriebs (9) durch ein Steuergerät (11) des Lenksystems (1) durchgeführt werden und wobei
1.5. wenigstens eine Funktion (ADYN,DYNRES) eine Dynamik des Stellantriebs (9) modellbasiert überwacht,
**dadurch gekennzeichnet, dass** eine erste Funktion den Status (adyn_stat) der Dynamik des Stellantriebs (9) anhand einer Differenz eines Zeitverlaufs eines gemessenen Zusatzwinkels (*δ_{M}*) von einem nominalen modellbasierten Zeitverlauf eines Zusatzwinkels (δ̂*_{M}*) des Stellantriebs (9) ermittelt, wobei die Differenz jeweils von Winkel, Winkelgeschwindigkeit und Winkelbeschleunigung berechnet wird.

2. Verfahren nach Anspruch 1,
**dadurch gekennzeichnet, dass**
die erste Funktion den Status (adyn_stat) der Dynamik des Stellantriebs (9) mit "0" bzw. "in Ordnung" angibt, wenn die Absolutbeträge aller Differenzwerte von Winkel, Winkelgeschwindigkeit und Winkelbeschleunigung kleiner oder gleich deren entsprechend vorgegebene Schwellwerte sind und andernfalls mit "1" bzw. "nicht in Ordnung" angibt.

3. Verfahren nach Anspruch 1 oder 2,
**dadurch gekennzeichnet, dass**
das Dynamikmodell (ADYN) einen Sollwert des Zusatzwinkels (δ*_{Md}*) als Eingangsgröße erhält und in Echtzeit modellbasierte Istwerte für Zusatzwinkel (δ̂*_{M}*), Zusatzwinkelgeschwindigkeit ( 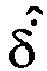 *_{M}*) und Zusatzwinkelbeschleunigung ( 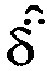 *_{M}*) berechnet.

4. Verfahren nach Anspruch 1,
**dadurch gekennzeichnet, dass**
eine zweite Funktion (DYNRES) eine maximal positive und/oder negative verfügbare zusätzliche Zusatzwinkelgeschwindigkeit ( 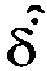 *_{M}*) des Stellantriebs (9) modellbasiert schätzt.

5. Verfahren nach einem der Ansprüche 1 bis 4,
**dadurch gekennzeichnet, dass**
die Ausgaben der ersten (ADYN) oder der zweiten Funktion (DYNRES) bzw. der Status (adyn_stat) der Dynamik des Stellantriebs (9) oder die geschätzte maximal verfügbare zusätzliche positive und/oder negative Zusatzwinkelgeschwindigkeit (δ̇*_{M_MAX_POS}*, δ̇*_{M_MAX_NEG}*)des Stellantriebs (9) über eine Schnittstelle anderen Fahrdynamiksystemen, insbesondere ESP, ASR und ABS zur Verfügung gestellt werden.

6. Verfahren nach einem der Ansprüche 1 bis 5,
**dadurch gekennzeichnet, dass**
das Steuergerät unter anderem den Sollwert des Zusatzwinkels (*δ_{Md}*)*,* den Zusatzwinkel (δ*_{M}*), den Ritzelwinkel (δ_{G}), den Lenkradwinkel (δ_{S}) und die Fahrzeuggeschwindigkeit (V_{X}) als Eingangsgrößen, insbesondere von Sensoren (12a,12b,12c) oder weiteren Fahrzeugsystemen erhält oder anhand anderer Eingangsgrößen, insbesondere Raddrehzahlen mittels eines geeigneten Modells, insbesondere des Lenksystems (1) berechnet.

7. Computerprogramm mit Programmcodemitteln, um ein Verfahren zum Betrieb eines Lenksystems (1) gemäß einem der Ansprüche 1 bis 7 durchzuführen, wenn dass Programm auf einem Mikroprozessor eines Computers, insbesondere auf dem Steuergerät (11) des Lenksystems (1), ausgeführt wird.

8. Computerprogrammprodukt mit Programmcodemitteln, die auf einem computerlesbaren Datenträger gespeichert sind, um ein Verfahren zum Betrieb eines servounterstützten Lenksystems (1) gemäß einem der Ansprüche 1 bis 7 durchzuführen, wenn dass Programm auf einem Mikroprozessor eines Computers, insbesondere auf dem Steuergerät (11) des Lenksystems (1), ausgeführt wird.

9. Steuergerät (11) für ein Lenksystem (1) eingerichtet zur Ausführung eines Computerprogramms gemäß Anspruch 7.

## Claims

1. Method for operating a steering system (1) of a motor vehicle,
1.1. a steering handle (2) predefining a steering wheel angle (δₛ) as a measure of a desired steering angle (δ_{Fm}) for at least one steerable wheel (5a, 5b) of the motor vehicle,
1.2. a steering gear unit (4) with a pinion (7) converting a pinion angle (δ_{G}) dependent on the steering wheel angle (δₛ) into the steering angle (δ_{Fm}) of the at least one steerable wheel (5a, 5b) of the motor vehicle,
1.3. superimposition means (8) producing an additional angle (δ*_{M}*) by means of an actuating drive (9) and the pinion angle (δ_{G}) from a superimposition of the additional angle (δ*_{M}*) on the steering wheel angle (δ*_{S}*) by means of a superimposition gear unit (10), and
1.4. the method for operating the steering system (1) and the actuation of the actuating drive (9) being carried out by a control unit (11) of the steering system (1), and
1.5. at least one function (ADYN, DYNRES) monitoring dynamics of the actuating drive (9) in a model-based fashion,
**characterized in that** a first function determines the status (adyn stat) of the dynamics of the actuating drive (9) by means of a difference between a time profile of a measured additional angle (δ*_{M}*) and a nominal, model-based time profile of an additional angle (δ̂_{M}) of the actuating drive (9), the difference in angle, angular speed and angular acceleration being respectively calculated.

2. Method according to Claim 1, **characterized in that** the first function specifies the status (adyn_stat) of the dynamics of the actuating drive (9) by "0" or "satisfactory" if the absolute variables of all the differential values for the angle, angular speed and angular acceleration are less than or equal to their correspondingly predefined threshold values and otherwise specifies said status by "1" or "unsatisfactory".

3. Method according to Claim 1 or 2, **characterized in that** the dynamic model (ADYN) receives a setpoint value of the additional angle (δ*_{Md}*) as an input variable and calculates, in real time, model-based actual values for additional angle (δ̂_{M}), additional angular speed ( 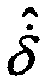 _{M}) and additional angular acceleration ( 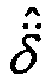 _{M}).

4. Method according to Claim 1, **characterized in that** the second function (DYNRES) estimates a maximum positive and/or negative available further additional angular speed ( 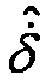 *_{M}*) of the actuating drive (9) in a model-based fashion.

5. Method according to one of Claims 1 to 4, **characterized in that** the outputs of the first function (ADYN) or of the second function (DYNRES) or the status (adyn_stat) of the dynamics of the actuating drive (9) or the estimated maximum available further positive and/or negative additional angular speed (δ̇*_{M_MAX_POS}*, δ̇ *_{M_MAX_NEG}*) of the actuating drive (9) are made available to other vehicle movement dynamics systems, in particular ESP systems, traction control systems and ABS systems, via an interface.

6. Method according to one of Claims 1 to 5, **characterized in that** the control unit receives, inter alia, the setpoint value of the additional angle (δ_{*M*d}), the additional angle (δ*_{M}*), the pinion angle (δ_{G}), the steering wheel angle (δ_{S}) and the vehicle speed (Vₓ) as input variables, in particular of sensors (12a, 12b, 12c) or further vehicle systems or calculates them by reference to other input variables, in particular wheel speeds by means of a suitable model, in particular of the steering system (1).

7. Computer program with program code means for carrying out a method for operating a steering system (1) according to one of Claims 1 to 7 when the program is run on a microprocessor of a computer, in particular on the control unit (11) of the steering system (1).

8. Computer program product with program code means which are stored on a computer-readable data carrier in order to carry out a method for operating a servo-supported steering system (1) according to one of Claims 1 to 7 when the program is run on a microprocessor of a computer, in particular on the control unit (11) of the steering system (1).

9. Control unit (11) for a steering system (1) configured for running a computer program according to Claim 7.

## Revendications

1. Procédé de fonctionnement d'un système de direction (1) d'un véhicule automobile,
1.1. une manette de direction (2) prédéfinissant un angle du volant (δ*ₛ*) en tant que dimension pour un angle de direction souhaité (δ*_{Fm}*) pour au moins une roue braquable (5a, 5b) du véhicule automobile,
1.2. un mécanisme de direction (4) avec un pignon (7) convertissant un angle de pignon (δ*_{G}*) dépendant de l'angle du volant (δ*ₛ*) en l'angle de direction (δ*_{Fm}*) de la au moins une roue braquable (5a, 5b) du véhicule automobile,
1.3. des moyens de superposition (8) créant un angle additionnel (δ*_{M}*) par un servomoteur (9) et l'angle de pignon (δ_{G}) à partir d'une superposition de l'angle du volant (δ_{S}) avec l'angle additionnel (δ*_{M}*) par un engrenage de superposition (10) et
1.4. le procédé de fonctionnement du système de direction (1) et l'amorçage du servomoteur (9) étant réalisés par un appareil de commande (11) du système de direction (1) et
1.5. au moins une fonction (ADYN,DYNRES) surveillant une dynamique du servomoteur (9) sur la base d'un modèle,
**caractérisé en ce qu'**une première fonction détermine l'état (adyn_stat) de la dynamique du servomoteur (9) à l'aide d'une différence du cours dans le temps d'un angle additionnel mesuré (δ*_{M}*) du cours dans le temps nominal basé sur un modèle d'un angle additionnel (δ̂*_{M}*) du servomoteur (9), la différence entre respectivement l'angle, la vitesse angulaire et l'accélération angulaire étant calculée.

2. Procédé selon la revendication 1,
**caractérisé en ce qu'**avec "0", la première fonction indique l'état (adyn_stat) de la dynamique du servomoteur (9) comme étant "en ordre", si les montants absolus de toutes les valeurs différentielles entre l'angle, la vitesse angulaire et l'accélération angulaire sont inférieures ou égales à leurs valeurs seuils prédéfinies en conséquence et dans le cas contraire, elle les indique comme n'étant "pas en ordre" avec "1".

3. Procédé selon la revendication 1 ou 2,
**caractérisé en ce que** le modèle dynamique (ADYN) obtient en tant que grandeur d'entrée une valeur de consigne pour l'angle additionnel (*δ_{Md}*) et calcule en temps réel des valeurs réelles basées sur un modèle pour l'angle additionnel (δ̂*_{M}*), la vitesse angulaire additionnelle ( 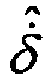 _{M}) et l'accélération angulaire additionnelle ( 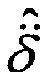 *_{M}*).

4. Procédé selon la revendication 1,
**caractérisé en ce qu'**une deuxième fonction (DYNRES) estime sur la base d'un modèle une vitesse angulaire additionnelle ( 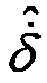 *_{M}*) supplémentaire maximale disponible, positive et/ou négative du servomoteur (9).

5. Procédé selon l'une quelconque des revendications 1 à 4, **caractérisé en ce que** les sorties de la première (ADYN) ou de la deuxième fonction (DYNRES), respectivement l'état (adyn_stat) de la dynamique du servomoteur (9) ou la vitesse angulaire additionnelle maximale disponible, positive et/ou négative (δ̇_{*M*_*MAX_POS*}, δ̇*_{M_MAX_NEG}*) du servomoteur (9) sont mises à disposition d'autres systèmes dynamiques d'exploitation du véhicule, notamment ESP, ASR et ABS,par l'intermédiaire d'une interface.

6. Procédé selon l'une quelconque des revendications 1 à 5,
**caractérisé en ce que** l'appareil de commande obtient inter alia la valeur de consigne pour l'angle additionnel (δ*_{Md}*), l'angle additionnel (δ*_{M}*), l'angle de pignon (δ_{G}), l'angle du volant (δ_{S}) et la vitesse du véhicule (Vₓ) en tant que grandeurs d'entrée, notamment de la part de capteurs (12a, 12b ,12c) ou d'autres systèmes du véhicule ou qu'à l'aide d'autres grandeurs d'entrée, il calcule notamment des vitesses de rotation des roues, au moyen d'un modèle adapté, notamment du système de direction (1).

7. Programme informatique avec des moyens de codage programme, pour réaliser un procédé de fonctionnement d'un système de direction (1) selon l'une quelconque des revendications 1 à 7, lorsque le programme est exécuté sur un microprocesseur d'un ordinateur, notamment sur l'appareil de commande (11) du système de direction (1).

8. Programme informatique avec des moyens de codage programme, qui sont mémorisés sur un support de données lisible par ordinateur, pour réaliser un procédé de fonctionnement d'un système de direction assistée (1) selon l'une quelconque des revendications 1 à 7, lorsque le programme est exécuté sur un microprocesseur d'un ordinateur, notamment sur l'appareil de commande (11) du système de direction (1).

9. Appareil de commande (11) pour un système de direction (1), installé pour l'exécution d'un programme informatique selon la revendication 7.
